# EUROPEAN PATENT SPECIFICATION

(11) **EP 0 657 690 B1**
(45) Date of publication and mention of the grant of the patent: **21.05.1997**
(21) Application number: 93309944.2
(22) Date of filing: 10.12.1993
(51) Int. Cl.: F23C 11/04

(54) **Pulse combustor**
Gerät mit pulsierender Verbrennung
Appareil à combustion pulsatoire

(43) Date of publication of application: 14.06.1995
(73) Proprietor: PALOMA KOGYO KABUSHIKI KAISHA, Nagoya-shi (JP)
(72) Inventor: Aoki, Yutaka, Sapporo-shi (JP); Itakura, Tadashi, Ebetsu-shi (JP)
(74) Representative: Harvey, David Gareth

(56) References cited:
- EP-A- 0 527 656
- EP-A- 0 556 038
- US-A- 4 891 003

## Description

The present invention relates to a pulse combustor, which separately supplies a rich mixture of primary air and gaseous fuel and secondary air to a combustion chamber thereof for continuous combustion.

### Description of the Related Art

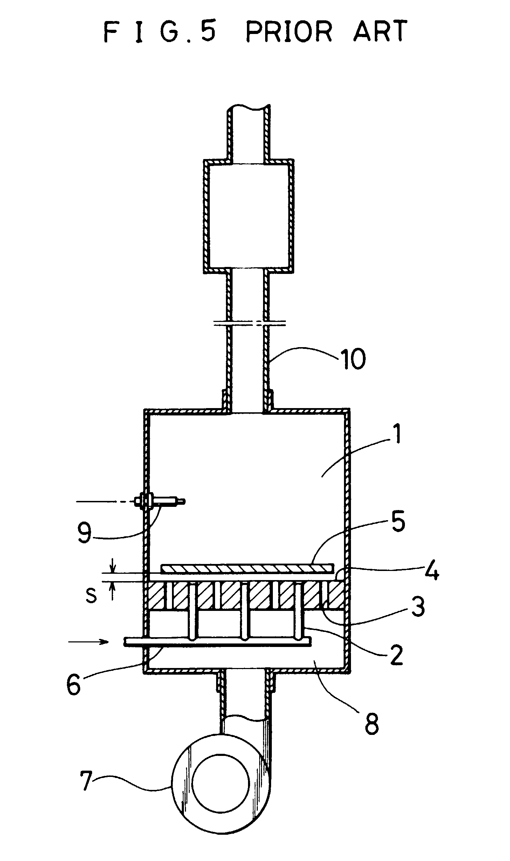

A typical example of a conventional pulse combustor for pulsative ignition and continuous combustion of an air/fuel mixture is disclosed in US Patent No. 4,891,003 (Japanese Patent Laying-Open Gazette No. Sho-64-23005). The prior art combustor, as shown in accompanying Fig. 5, has a cylindrical combustion chamber 1, a nozzle plate 4 with a plurality of gas nozzles 2 and a plurality of air nozzles 3 arranged in the combustion chamber 1, and a circular resistant plate 5 disposed opposite to the nozzle plate 4 via a predetermined narrow space S. A jet of rich air/fuel mixture running through a gas conduit 6 is supplied from each of the gas nozzles 2 to the combustion chamber 1 while a jet of secondary air fed to an air chamber 8 by means of a fan 7 is supplied from each of the air nozzles 3 to the combustion chamber 1. The rich air/fuel mixture and the secondary air are sufficiently mixed between the resistant plate 5 and the nozzle plate 4, and ignited by a spark of an ignition plug 9 in the combustion chamber 1 for pulse combustion. A large portion of hot combustion byproducts is exhausted through a tail pipe 10. Although the high explosion pressure in the combustion chamber 1 tends to cause a back flow of the combustion byproducts to the supply source, the resistant plate 5 in the combustion chamber 1 prevents such undesirable back flow. Exhaustion of the combustion byproducts makes the pressure in the combustion chamber 1 negative, so that another jet of the rich air/fuel mixture and that of the secondary air are successively fed into the combustion chamber 1 and spontaneously ignited and combusted by the residual hot exhausted gas in the combustion chamber 1. Ignition and combustion are periodically repeated in the above manner to heat an object like cooking oil in an oil tank.

In the system of the prior art pulse combustor, however, combustion byproducts once flown back to the supply source are not effectively mixed with the rich air/fuel mixture and the secondary air nor returned to the combustion chamber 1. Relatively high supply pressures of the rich air/fuel mixture and the secondary air as well as the resistant plate 5 are required for efficiently preventing the back flow of combustion byproducts. More concretely, the pulse combustor of the prior art system requires a high-pressure fan or a compressor for supplying the high-pressure air and a complicated, rather bulky gas supply unit for supplying the high-pressure fuel gas. These structures unfavorably increase the noise and vibration.

Furthermore, in the prior art system, the rich air/fuel mixture and the secondary air are mixed only in the predetermined narrow space S between the resistant plate 5 and the nozzle plate 4, which causes non-uniform mixing and thereby unstable combustion.

The object of the invention is to provide a simply constructed, improved pulse combustor which realizes stable, continuous combustion with reduced noise and vibration.

The above and other related objects are realized by a pulse combustor of the invention, wherein a rich mixture of primary air and gaseous fuel and a secondary air are separately supplied to a cylindrical combustion chamber for pulsative ignition and continuous combustion of an appropriate air/fuel mixture.

The present invention commences from US-A-4 891 003 which discloses a pulse combustor in which a combustion chamber is separately supplied with a rich mixture of primary air and gaseous fuel and secondary air for pulsative ignition and continuous combustion of an appropriate air/fuel mixture,
said pulse combustor comprising the said combustion chamber which is defined by a cylindrical side wall, a first surface to which discharge means is connected for exhausting hot combustion byproducts from said combustion chamber, and a nozzle plate having a plurality of gas nozzles for supplying said rich mixture of primary air and gaseous fuel to said combustion chamber and a plurality of air nozzles for supplying said secondary air to said combustion chamber,
said pulse combustor further comprising flame baffle means disposed opposite to said nozzle plate via a predetermined space, to absorb heat and reverse pressure generated by said hot combustion byproducts which in use flow back from said combustion chamber,
air supply means for supplying said secondary air to said combustion chamber through said plurality of air nozzles, said air supply means in use receiving said hot combustion byproducts which flow back from said combustion chamber, and
a fan for continuously feeding said secondary air to said air supply means.

In US-A-4 891 003, the combustion chamber is of greater volume than the air supply means. In contrast, EP-A-O 527 656 discloses a pulse combustor wherein the air supply means has a greater volume than the combustion chamber.

Starting from US-A-4 891 003, the present invention provides a pulse combustor which is characterised in that the combustion chamber has a volume which is smaller than the volume of said air supply means, and in that said flame baffle means comprises first and second baffle plates, both extending to a predetermined length covering all of said plurality of air nozzles and gas nozzles on said nozzle plate, the first baffle plate having first and second surfaces of which the said first surface is disposed opposite to said nozzle plate via said predetermined space and the second surface faces said second baffle plate via a predetermined distance, and said flame baffle means further comprises a baffle ring disposed radially along said cylindrical side wall of said combustion chamber and located between the first and said second baffle plates, said plates and said ring providing a zigzag gas flow path between the combustion chamber and the air supply means.

A preferred pulse combustor embodying this invention is disclosed in detail hereinafter. The combustor has a cylindrical combustion chamber having a predetermined first volume for receiving the rich mixture of primary air and gaseous fuel and the secondary air separately, a tail pipe connecting to the combustion chamber for exhausting hot combustion byproducts sent from the combustion chamber, and a nozzle plate having a plurality of gas nozzles for supplying the rich mixture of primary air and gaseous fuel to the combustion chamber and a plurality of air nozzles for supplying the secondary air to the combustion chamber.

The combustion chamber is defined by a first surface which the tail pipe is connected to, a cylindrical side wall, and the nozzle plate having the plurality of gas nozzles and air nozzles.

The pulse combustor of the invention further includes a flame baffle unit disposed opposite to the nozzle plate via a predetermined space for absorbing heat and reverse pressure generated by the hot combustion byproducts back flow from the combustion chamber, an air supply unit having a predetermined second volume which is greater than the predetermined first volume, for supplying the secondary air to the combustion chamber through the plurality of air nozzles and receiving the hot combustion byproducts back flown from the combustion chamber, an ever-on fan for continuously feeding the secondary air to the air supply unit, and a specific system for mixing the secondary air continuously fed to air supply unit by means of the fan with the hot combustion byproducts back flown from the combustion chamber and received by the air supply unit, and feeding mixture of the secondary air and the hot combustion byproducts back to the combustion chamber via the plurality of air nozzles.

In the pulse combustor of the invention thus constructed, the rich mixture of primary air and gaseous fuel (hereinafter referred to as the rich air/fuel mixture) is supplied from the plurality of gas nozzles whereas the secondary air is fed from the plurality of air nozzles. The rich air/fuel mixture and the secondary air are sufficiently mixed in the predetermined space between the nozzle plate and the flame baffle unit and then ignited in the combustion chamber for pulsative combustion. The large combustion pressure in the combustion chamber exhausts a large portion of hot combustion byproducts from the tail pipe while a small portion of the combustion byproducts is back flown to the air supply unit. Although the flame baffle unit effectively prevents the large reverse pressure from being applied directly into the air supply unit, a small portion of the hot combustion byproducts flows around the flame baffle unit, following a zig-zag path, back to the air supply unit. In this path around the flame baffle unit, the hot combustion byproducts are effectively cooled down, and this temperature drop further causes contraction in volume and lowers the pressure of the exhausted gas. The predetermined second volume of the air supply unit is greater than the predetermined first volume of the combustion chamber as described previously. Such a volume ratio significantly reduces the reverse pressure from the combustion chamber. The small portion of the combustion byproducts back flown to the air supply unit is sufficiently mixed with the secondary air and thereby does not cause any adverse effect on smooth combustion.

The secondary air continuously fed into the air supply unit by means of the ever-on fan is mixed with the back-flown combustion byproducts and fed to the combustion chamber via the plurality of air nozzles. In this structure, the reverse pressure from the combustion chamber is sufficiently reduced, and the fan used here for supplying the secondary air to the air supply unit does not require high pressure or large capacity, accordingly. The fan having moderate capacity has favorably small noise and vibration. Furthermore, the back-flow of the combustion byproducts from the combustion chamber lowers the combustion pressure in the combustion chamber. These features of the invention allow effective noise and vibration reduction.

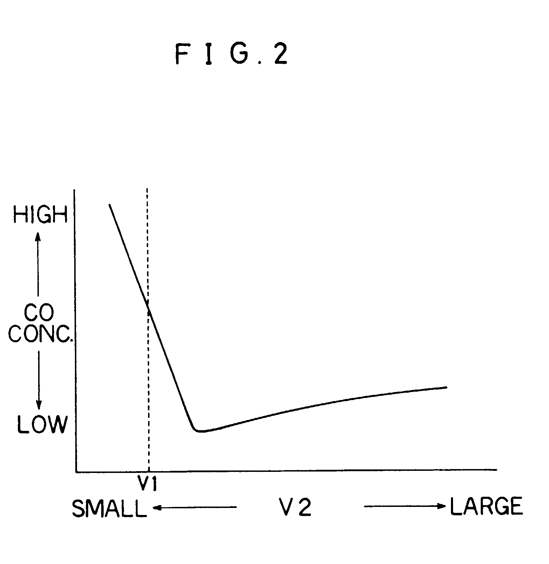

The combustion efficiency is largely affected by the ratio of a second volume V2 in the air supply unit (hereinafter referred to as the supply volume) to a first volume V1 in the combustion chamber (hereinafter referred to as the combustion volume). As shown in Fig. 2, the concentration of carbon monoxide expressed by the ratio of CO to CO₂ varies with the ratio of the supply volume V2 to the combustion volume V1. When the supply volume V2 is less than the combustion volume V1, the combustion efficiency is undesirably lowered. In the structure of the invention, the supply volume V2 is greater than the combustion volume V1, thus allowing sufficient reduction of the reverse pressure and realizing stable pulse combustion.

In accordance with this invention, the flame baffle unit includes a first baffle plate and a second baffle plate both extending to a predetermined length covering all of the plurality of air nozzles and gas nozzles on the nozzle plate. The first baffle plate has a first surface and a second surface, where the first surface is disposed opposite to the nozzle plate via the predetermined space and the second surface faces the second baffle plate via a predetermined distance. The flame baffle unit further includes a baffle ring disposed radially along the cylindrical side wall of the combustion chamber and between the first baffle plate and the second baffle plate. The first baffle plate, the baffle ring, and the second baffle plate are preferably spaced at substantially equal intervals.

In another preferred application, the flame baffle unit includes a ring-shaped flame trap and a baffle plate disposed opposite to the nozzle plate via the predetermined space. The baffle plate extends to a predetermined length covering all of the air nozzles and gas nozzles on the nozzle plate whereas the ring-shaped flame trap is disposed radially between the baffle plate and the cylindrical side wall of the combustion chamber.

In still another structure of the invention, the flame baffle unit includes a baffle plate disposed opposite to the nozzle plate via the predetermined space. The baffle plate has a plurality of through holes and spans the side wall of the combustion chamber.

The present invention will now be described by way of example only with reference to the accompanying drawings, in which:
Fig. 1 is a cross sectional view schematically illustrating a pulse combustor which does not embody the invention;
Fig. 2 is a graph showing the combustion efficiency plotted against the ratio of a supply volume V2 to a combustion volume V1;
Fig. 3 is a cross sectional view schematically illustrating a pulse combustor as embodying the invention;
Fig. 4 is an enlarged view showing an essential part of the pulse combustor of Fig. 3; and
Fig. 5 is a cross sectional view schematically illustrating a conventional pulse combustor.

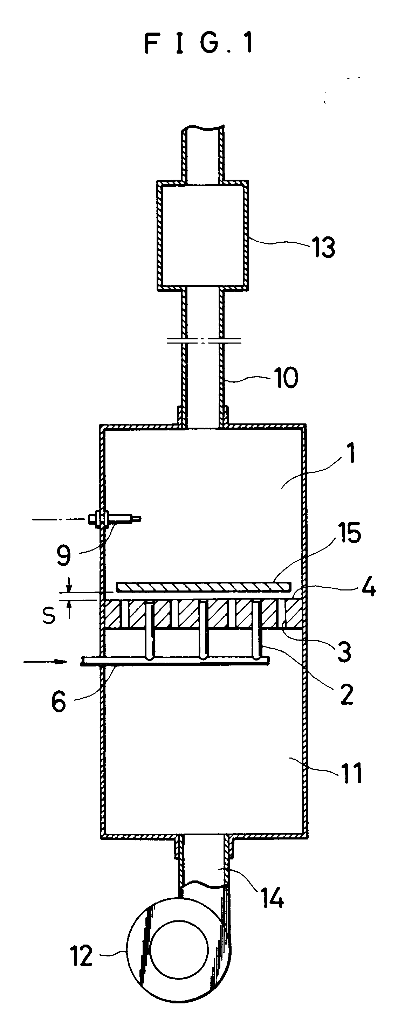

Fig. 1 is a cross sectional view schematically illustrating a pulse combustor which does not embody the invention. In this pulse combustor, an air chamber 11 has a greater inner volume than the air chamber 8 of the conventional system shown in Fig. 5, and an ever-on fan 12 has a moderate capacity compared with the high-pressure fan 7 of the conventional system. The pulse combustor also includes a baffle plate 15 in place of the resistant plate 5.

The pulse combustor of Fig. 1 includes a cylindrical combustion chamber 1 having a predetermined first volume, the air chamber 11 having a predetermined second volume greater than the first volume, and a nozzle plate 4 disposed between the combustion chamber 1 and the air chamber 11 to function as a partition and separate the combustion chamber 1 from the air chamber 11. The nozzle plate 4 is provided with a plurality of gas nozzles 2 for supplying a non-flammable rich mixture of primary air and gaseous fuel and a plurality of air nozzles 3 for supplying secondary air. The air chamber 11 is in communication with the combustion chamber 1 through the plurality of air nozzles 3. The plurality of gas nozzles 2 are connected to a gas supply conduit 6.

The pulse combustor of Fig. 1 further includes the fan 12, for example, a multiblade fan, for feeding the secondary air, and an air supply conduit 14 coupled with and connected to the fan 12 to supply the secondary air to the air chamber 11. Since the air chamber 11 has a sufficiently large inner volume, the required capacity of the fan 12 is significantly reduced.

The combustion chamber 1 is further connected to a tail pipe 10 for exhausting hot combustion byproducts and a decoupler or expansion chamber 13 disposed in the middle of the tail pipe 10. The pulse combustor may include a plurality of tail pipes, which may be disposed on a side wall of the combustion chamber 1.

The baffle plate 15 is arranged in the combustion chamber 1 to be located opposite to the nozzle plate 4 via a predetermined narrow space S. The baffle plate 15 effectively absorbs the heat of the hot combustion byproducts back flowing from the combustion chamber 1 to the air chamber 11.

A jet of a rich mixture of primary air and gaseous fuel (hereinafter referred to as the rich air/fuel mixture) running through the gas supply conduit 6 is supplied to the combustion chamber 1 via each of the gas nozzles 2 on the nozzle plate 4 as clearly seen in Fig. 1. A jet of secondary air fed to the air chamber 11 by means of the fan 12 is, on the other hand, supplied to the combustion chamber 1 via each of the air nozzles 3. The rich air/fuel mixture and the secondary air are sufficiently mixed in the predetermined space S between the baffle plate 15 and the nozzle plate 4 combusted in the combustion chamber 1. In this arrangement, the nozzle plate 4 has three gas nozzles 2 (diameter: 3 millimeter) and ten air nozzles 3 (diameter: 4 millimeter). The thickness of the baffle plate 15 is 4 millimeter, and the predetermined narrow space S between the baffle plate 15 and the nozzle plate 4 is equal to 3 millimeter.

The sufficiently mixed rich air/fuel mixture and secondary air (hereinafter referred to as the air/fuel mixture) is ignited with a spark of an ignition plug 9 in the combustion chamber 1 for pulse combustion.

The high explosion and combustion pressure in the combustion chamber 1 exhausts a large portion of hot combustion byproducts through the tail pipe 10 whereas a small portion of the hot combustion byproducts flows back to the air chamber 11. Although the baffle plate 15 prevents the large reverse pressure from being applied into the air chamber 11 directly, the small portion of the combustion byproducts flows around the baffle plate 15 to go back to the air chamber 11. In this pathway around the baffle plate 15, the hot combustion byproducts are effectively cooled down, and this temperature drop further causes contraction in volume and lowers the pressure of the exhausted gas. Since the second volume of the air chamber 11 is greater than the first volume of the combustion chamber 1 as described previously, the reverse pressure from the combustion chamber 1 is significantly reduced, and the combustion byproducts back flown to the air chamber 1 is sufficiently mixed with the secondary air.

The secondary air continuously fed into the air chamber 11 by means of the ever-on fan 12 is mixed with the back-flown combustion byproducts and fed to the combustion chamber 1 via the plurality of air nozzles 3. Under such circumstances, the reverse pressure from the combustion chamber 1 is sufficiently low, and the fan 12 used here for supplying the secondary air to the air chamber 11 does not require high pressure or large capacity, accordingly. The fan 12 having moderate capacity has favorably small noise and vibration. Furthermore, the back-flow of the combustion byproducts from the combustion chamber 1 lowers the combustion pressure in the combustion chamber 1, thus reducing the combustion noise. The turn-down ratio can be raised preferably by controlling the air supply volume fed by the fan 12 and the volume of the rich air/fuel mixture.

In the pulse combustor thus constructed, the combustion efficiency is largely affected by the ratio of a total volume V2 of an air supply system (the volume of the air chamber 11 plus that of the air supply conduit 14: hereinafter referred to as the supply volume V2) to a volume V1 of the combustion chamber 1 (hereinafter referred to as the combustion volume V1). Fig. 2 shows variation in the concentration of carbon monoxide (expressed as the ratio of CO/ CO₂) plotted against the ratio of the supply volume V2 to the combustion volume V1. In the range where the supply volume V2 is less than the combustion volume V1, the concentration of CO is significantly high; that is, the combustion efficiency is undesirably low. On the contrary, in the range where the supply volume V2 is greater than the combustion volume V1, the CO concentration first abruptly decreases and then gradually increases with increase in the ratio of the supply volume V2 to the combustion volume V1. In this range, the CO concentration is sufficiently low; that is, the combustion efficiency is preferably high.

The smaller supply volume V2 than the combustion volume V1 causes insufficient mixing of the back-flown combustion byproducts with the secondary air, thus lowering the combustion efficiency. Furthermore, the small supply volume V2 does not sufficiently reduce the reverse pressure and requires a relatively large capacity of the fan 12.

When the supply volume V2 is greater than the combustion volume V1, the smaller pressure loss and leaner air/fuel ratio increase the CO concentration only in the allowable range. In the embodiment, the supply volume V2 is determined to be sufficiently larger than the combustion volume V1 so as to lower the CO concentration to the minimum, thus significantly improving the combustion efficiency.

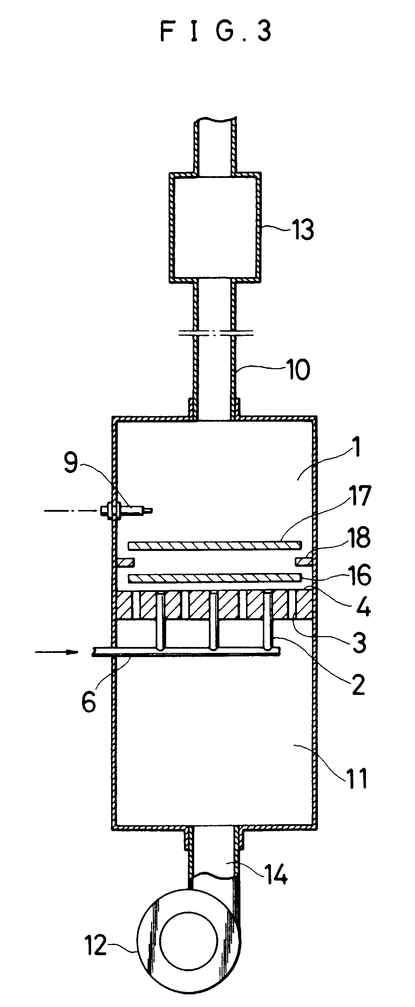

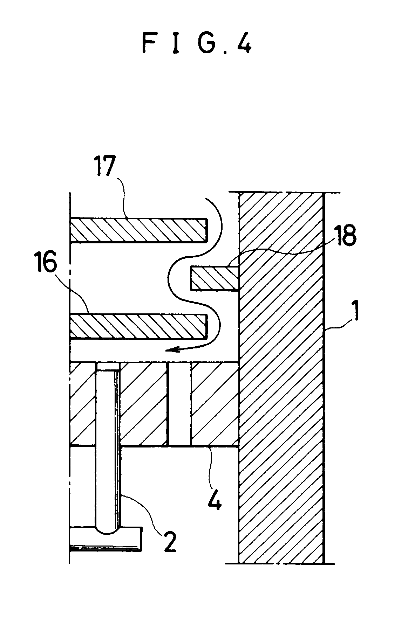

A pulse combustor according to the invention is now described with the accompanying drawings of Figs. 3 and 4. A pulse combustor of this embodiment includes a plurality of baffle plates for improvement in heat absorption effects. More concretely, the pulse combustor as shown in Fig. 3 includes a first baffle plate 16 and a second baffle plate 17 both extending to a predetermined length covering all of the plurality of air nozzles 3 and gas nozzles 2 on the nozzle plate 4. The first baffle plate 16 has a first surface and a second surface, where the first surface is disposed opposite to the nozzle plate 4 via a predetermined first distance and the second surface faces the second baffle plate 17 via a predetermined second distance. The first baffle plate 16 and the second baffle plate 17 have identical dimensions in this embodiment. The pulse combustor is further provided with a baffle ring 18 disposed radially along a cylindrical side wall of the combustion chamber 1 and between the first baffle plate 16 and the second baffle plate 17. In the preferred structure, the first baffle plate 16, the baffle ring 18, and the second baffle plate 17 are spaced at substantially equal intervals as clearly seen in Fig. 4. The heat of hot combustion byproducts back flown to the air chamber 11 is efficiently absorbed through a zigzag pathway through the second baffle plate 17, the baffle ring 18, and the first baffle plate 16.

As described above, in the pulse combustor of the invention, the supply volume is set greater than the combustion volume to allow the combustion byproducts to be partly back flown to the air supply system. The back-flown combustion byproducts are sufficiently mixed with the secondary air continuously fed by means of the ever-on fan and fed back to the combustion chamber. Such a system attains favorable combustion without a large capacity fan, and accordingly reduces undesirable noise and vibration to the minimum.

## Claims

1. A pulse combustor in which a combustion chamber (1) is separately supplied with a rich mixture of primary air and gaseous fuel and secondary air for pulsative ignition and continuous combustion of an appropriate air/fuel mixture,
said pulse combustor comprising the said combustion chamber (1) which is defined by a cylindrical side wall, a first surface to which discharge means (10, 13) is connected for exhausting hot combustion byproducts from said combustion chamber, and a nozzle plate (4) having a plurality of gas nozzles (2) for supplying said rich mixture of primary air and gaseous fuel to said combustion chamber (1) and a plurality of air nozzles (3) for supplying said secondary air to said combustion chamber,
said pulse combustor further comprising flame baffle means (15; 16-19; 20) disposed opposite to said nozzle plate (4) via a predetermined space, to absorb heat and reverse pressure generated by said hot combustion byproducts which in use flow back from said combustion chamber,
air supply means (11) for supplying said secondary air to said combustion chamber (1) through said plurality of air nozzles (3), said air supply means (11) in use receiving said hot combustion byproducts which flow back from said combustion chamber (1),
a fan (12) for continuously feeding said secondary air to said air supply means (11),
said pulse combustor being characterised in that said combustion chamber (1) has a volume V1 which is smaller than the volume V2 of said air supply means (11), and in that said flame baffle means comprises first and second baffle plates (16, 17), both extending to a predetermined length covering all of said plurality of air nozzles (3) and gas nozzles (2) on said nozzle plate (4), the first baffle plate (16) having first and second surfaces of which the said first surface is disposed opposite to said nozzle plate (4) via said predetermined space and the second surface faces said second baffle plate (17) via a predetermined distance, and said flame baffle means further comprises a baffle ring (18) disposed radially along said cylindrical side wall of said combustion chamber (1) and located between the first and said second baffle plates (16,17), said plates (16,17) and said ring (18) providing a zigzag gas flow path between the combustion chamber (1) and the air supply means (11).

2. A pulse combustor in accordance with claim 1, wherein said first baffle plate (16), said baffle ring (18), and said second baffle plate (17) are spaced at substantially equal intervals.

## Patentansprüche

1. Ein Gerät mit pulsierender Verbrennung, bei dem eine Brennkammer (1) getrennt mit einem fetten Gemisch aus Primärluft und gasförmigem Brennstoff und Sekundärluft für pulsierende Zündung und kontinuierliche Verbrennung eines geeigneten Luft-/ Brennstoffgemisches versorgt wird,
wobei dieses Gerät mit pulsierender Verbrennung die besagte Brennkammer (1) umfaßt, die durch eine zylindrische Seitenwand, eine erste Oberfläche, mit der Ablaßeinrichtungen (10,13) zum Ablassen heißer Verbrennungsnebenprodukte aus dieser Brennkammer verbunden sind, und eine Düsenplatte (4) mit einer Vielzahl von Gasdüsen (2) für die Zufuhr des fetten Gemisches aus Primärluft und gasförmigem Brennstoff zu der Brennkammer (1) und einer Vielzahl von Luftdüsen (3) für die Zufuhr der Sekundärluft zu der Brennkammer begrenzt ist,
wobei das Gerät mit pulsierender Verbrennung weiterhin Flammenprallplatten-Einrichtungen (15;16-19;20), die der Düsenplatte (4) mit einem vorgegebenen Freiraum gegenüberliegend angeordnet sind, umfaßt, um Wärme und Rückkehrdruck aufzunehmen, die durch die heißen Verbrennungsnebenprodukte erzeugt werden, die im Gebrauch von der Brennkammer zurückströmen, eine Luftzufuhreinrichtung (11) zum Zuführen der Sekundärluft zu der Brennkammer (1) durch die Vielzahl von Luftdüsen (3) vorgesehen ist, wobei die Luftzufuhreinrichtung (11) im Betrieb die heißen Verbrennungsnebenprodukte, die von der Brennkammer (1) zurückströmen, empfängt,
ein Gebläse (12) zum kontinuierlichen Zuführen der Sekundärluft zu der Luftzufuhreinrichtung (11) vorgesehen ist,
wobei das Gerät mit pulsierender Verbrennung dadurch gekennzeichnet ist, daß die Brennkammer (1) ein
Volumen V1 aufweist, das kleiner als das Volumen V2 der Luftzufuhreinrichtung (11) ist, und dadurch, daß die Flammenprallplatten-Einrichtung erste und zweite Prallplatten (16,17) umfaßt, die sich beide bis zu einer vorgegebenen Länge erstrecken, so daß sie alle der Vielzahl der Luftdüsen (3) und der Gasdüsen (2) auf der Düsenplatte (4) überdecken, und die erste Prallplatte (16) eine erste und eine zweite Oberfläche aufweist, von denen die erste Oberfläche der Düsenplatte (4) mit dem vorgegebenen Freiraum gegenüberliegend angeordnet ist und die zweite Oberfläche der zweiten Prallplatte (17) mit einem vorgegebenen Abstand gegenüberliegt, und die Flammenprallplatten-Einrichtung weiterhin ein Ringleitblech (18) umfaßt, das radial entlang der zylindrischen Seitenwand der Brennkammer (1) angeordnet ist und zwischen der ersten und der zweiten Prallplatte (16,17) gelegen ist, und die Platten (16,17) und der Ring (18) einen zickzackförmigen Gasströmungsweg zwischen der Brennkammer (1) und der Luftzufuhreinrichtung (11) bilden.

2. Ein Gerät mit pulsierender Verbrennung nach Anspruch 1, bei dem die erste Prallplatte (16), das Ringleitblech (18) und die zweite Prallplatte (17) mit im wesentlichen gleichen Abständen voneinander entfernt sind.

## Revendications

1. Appareil de combustion pulsatoire dans lequel une chambre à combustion (1) est alimentée séparément avec un mélange riche d'air primaire et de gaz combustible et avec de l'air secondaire pour obtenir un allumage pulsatoire et une combustion continue d'un mélange air/combustible approprié,
ledit appareil de combustion pulsatoire comprenant ladite chambre de combustion (1) qui est définie par une paroi latérale cylindrique, une première surface à laquelle des moyens de sortie (10, 13) sont reliés pour évacuer les sous-produits chauds de la combustion de ladite chambre de combustion, et une plaque à buses (4) ayant une pluralité de buses de gaz (2) pour fournir ledit mélange riche d'air primaire et de combustible gazeux à ladite chambre de combustion (1), et une pluralité de buses d'air (3) pour fournir ledit air secondaire à ladite chambre de combustion,
ledit appareil de combustion pulsatoire comprenant en outre des moyens formant chicane de flamme (15 ; 16-19 ; 20) disposés face à ladite plaque à buses (4), avec interposition d'un espace prédéterminé, pour absorber la chaleur et la pression inverse engendrée par lesdits sous-produits chauds de la combustion qui, en utilisation, refluent en provenance de ladite chambre de combustion,
des moyens d'alimentation en air (11) servant à fournir ledit air secondaire à ladite chambre de combustion (1) à travers ladite pluralité de buses d'air (3), lesdits moyens d'alimentation en air (11) recevant en utilisation lesdits sous-produits chauds de la combustion qui refluent en provenance de ladite chambre de combustion (1),
un ventilateur (12) servant à fournir continuellement ledit air secondaire auxdits moyens d'alimentation en air (11),
ledit appareil de combustion pulsatoire étant caractérisé en ce que la chambre de combustion (1) possède un volume V2 qui est plus petit que lesdits moyens d'alimentation en air (11), et en ce que lesdits moyens formant chicane de flamme comprennent des première et seconde plaques de chicane (16, 17) qui s'étendent toutes deux sur une longueur prédéterminée couvrant la totalité de ladite pluralité de buses d'air (3) et de buses de gaz (2) prévues sur ladite plaque à buses (4), ladite première plaque de chicane (16) ayant des première et des deuxième surfaces dont la première surface est disposée face à ladite plaque à buses (4), avec interposition dudit espace prédéterminé et la seconde surface fait face à ladite seconde plaque à buses (17) avec interposition d'une distance prédéterminée et, lesdits moyens formant chicane de flamme comprennent en outre une couronne de chicane (18) disposée radialement le long de ladite paroi latérale cylindrique de ladite chambre de combustion (1) et placée entre lesdits première et seconde plaques de chicane (16, 17), lesdites plaques et ladite couronne (16, 17) donnant naissance à un trajet d'écoulement de gaz (18) en zigzag entre la chambre de combustion (1) et les moyens d'alimentation en air (11).

2. Appareil à combustion pulsatoire selon la revendication 1, dans lequel ladite première plaque de chicane (16), ladite couronne de chicane (18), et ladite seconde plaque de chicane (17) sont espacées par des intervalles à peu près égaux.
